# EUROPÄISCHE PATENTANMELDUNG

(11) **EP 2 597 069 A1**
(43) Veröffentlichungstag der Anmeldung: **29.05.2013**
(21) Anmeldenummer: 12194456.5
(22) Anmeldetag: 28.09.2009
(51) Int. Cl.: C01B 37/00, C01B 37/02, B01J 29/03, C01B 39/52, B01D 53/22, B01D 69/02, B01D 71/02, B01D 67/00, B01D 53/047

(54) **Templatfreie clathrasile und clathrasil-membranen**

(30) Priorität: 02.10.2008 EP 08165789
(62) Teilanmeldung aus: 09783447.7
(71) Anmelder: BASF SE, 67056 Ludwigshafen (DE)
(72) Erfinder: Voß, Hartwig, 67227 Frankenthal (DE); Therre, Jörg, 67551 Worms (DE); Gies, Hermann, 45549 Sprockhövel (DE); Marler, Bernd, 58285 Gevelsberg (DE)

(57) **Zusammenfassung**

Die vorliegende Erfindung betrifft templatfreie Clathrasile, deren Gerüst im Wesentlichen SiO₂ enthält, wobei die Kristalle der Clathrasile die plättchenförmige Morphologie der Schichtsilikate aufweisen. Ferner betrifft die vorliegende Erfindung deren Verwendung als Absorbens, als Seedkristalle für die Synthese von Clathrasil-Membranen des gleichen Zeolithtyps und in Form von dichten Schichten, die als molekular siebende Gastrennmembranen fungieren.

## Beschreibung

Die vorliegende Erfindung betrifft templatfreie Clathrasile, deren Gerüst im Wesentlichen SiO₂ enthält, wobei die Kristalle der Clathrasile die plättchenförmige Morphologie der Schichtsilikate aufweisen. Ferner betrifft die vorliegende Erfindung ein Verfahren zur Herstellung dieser templatfreien Clathrasile, sowie deren Verwendung als Absorbens, als Seedkristalle für die Synthese von Clathrasil-Membranen des gleichen Zeolithtyps und in Form von dichten Schichten, die als molekular siebende Gastrennmembranen fungieren.

Die Verwendung von Membranen zur Trennung verschiedener Komponenten von Gasmischungen ist allgemein bekannt. Membranen sind verwendet worden, um eine Vielzahl von Gasen zu trennen, zu entfernen, zu reinigen oder partiell wiederzugewinnen.

Derzeit ist von besonderem Interesse die Abtrennung von Wasserstoff aus wasserstoffhaltigen Kohlenwasserstoffgemischen bzw. aus Kohlenmonoxid und/oder Kohlenstoffdioxid. Beispielsweise wird eine solche Abtrennung bei der Herstellung von Propen aus Propan (Dehydrierung), von Synthesegas (Einstellung des H₂/CO-Verhältnisses) oder von Wasserstoff über die Wassergasshiftreaktion (Umsatz von CO mit Wasser zu CO₂ und H₂) benötigt. Zur Abtrennung von Wasserstoff und/oder Wasser werden im Stand der Technik überwiegend Polymermembranen eingesetzt. Beispielsweise beschreibt WO 08/46880 den Einsatz von Polyimidmembranen. Die Polymermembranen sind generell bei einer Temperatur von 20 bis 80 °C, in Einzelfällen bis 120 °C, einsetzbar. Da bei den meisten großtechnischen Verfahren allerdings die wasserstoffhaltigen Gasgemische bei hohen Temperaturen von 200 bis 600 °C anfallen, müssen diese vor dem Kontakt mit der Polymermembran abgekühlt werden. Diese Kühlung stellt einen aufwendigen und kostenintensiven Prozessschritt dar.

Es besteht demnach ein hoher Bedarf an Membranen, die bei erhöhten Temperaturen Wasserstoff aus wasserstoffhaltigen gas- bzw. dampfförmigen Stoffgemischen abtrennen können.

Aluminiumarme bzw. im Wesentlichen nur SiO₂-haltige Zeolithe sind dem Fachmann allgemein als temperarturstabile Materialien bekannt. Der Vorteil von Zeolithen ist, dass sie eine kristalline Struktur und eine definierte Porengröße besitzen. Zeolithe können demnach aufgrund ihrer speziellen Topologie für Separationsanwendungen mittels molekularen Siebens eingesetzt werde. D. h. Moleküle mit kleinerem bzw. ähnlichem kinetischen Durchmesser wie der Durchmesser der größten Zeolithpore können in die Gerüststruktur eindringen und werden adsorbiert oder aufgrund einer Triebkraft durch die Gerüststruktur transportiert, größere Moleküle werde ausgesperrt bzw. zurückgehalten. Für einen gegebenen Zeolithgerüsttyp, welcher die Topologie der Gerüst- und Porenstruktur definiert, ist damit festgelegt, welche im Gemisch vorhandenen gas- bzw. dampfförmigen Moleküle nach dem Prinzip der molekularen Siebens separiert werden können.

Im Stand der Technik werden z. B. Zeolithmembranen des Reinsilica-Typs MFI (MFI besitzt 10er-Ringe; z. B. Kalipcilar et. al.: effect of seeding on the properties of MFI type zeolite membranes; Desalination 200 (2006) 66-67) oder DDR (DDR besitzt 8er-Ringe, NGK Insulators: porous structure with seed crystal-containing layer for manufacturing zeolite membrane and method for manufacturing zeolite membrane, EP 1894613) beschrieben; diese Zeolithe haben Porendurchmesser > 0,35 nm und weisen damit keine Porengröße im Bereich des Gasdurchmessers von Wasserstoff auf.

Die im Stand der Technik beschriebenen Zeolithmembranen werden üblicherweise über die sogenannte "secondary growth"-Methode hergestellt (beispielsweise van der Donk et al. in Microporous and Mesoporous Materials 115 (2008) 3-10). Hierzu werden auf einem porösen anorganischen Träger metallischer oder keramischer Art Seedkristalle durch Auffiltration oder durch Anheften mit polymeren quarternären Ammoniumverbindungen aufgebracht und anschließend durch Sintern angeheftet. Nach dem Sintern wird die Rückseite der zukünftigen Zeolithmembran flüssigkeitsdicht abgedeckt und der Träger wird in eine Syntheselösung eingebracht, wobei die Syntheselösung Wasser, organische Strukturbildner (Template) wie beispielsweise Tetrapropylammoniumhydroxid, 1-Aminoadamantan oder Chinuclidin eine SiO₂-Quelle wie beispielsweise TEOS (Tetraethylorthosilicat) oder Kieselsole (gelöste Polykieselsäuren bzw. Dispersionen amorphen Siliciumdioxids) und gegebenenfalls anorganische Hilfsstoffe wie beispielsweise Basen, Salze etc. enthält. Die hydrothermale Aufkristallisation einer dichten Zeolithschicht erfolgt dann in der Syntheselösung bei Temperaturen zwischen 80 und 180 °C. Eine gute Übersicht zum Thema Zeolithmembranen und der Synthese von Zeolithmembranen gibt z. B. Caro et. al. in Microporous and Mesoporous Materials 115 (2008) 215-233 (zeolite membranes - recent developments and progress).

Die Clathrasile hingegen, deren Gerüst im Wesentlichen SiO₂ und keine weiteren Metalle wie beispielsweise Al enthalten, sind aufgrund der Gerüststruktur, die ein 6-Ringporensystem mit einem (temperaturabhängigen) Porendurchmesser von ca. 0,25 - 0,27 nm besitzt, prinzipiell geeignet im Verfahren der Gasseparation, Dampfpermeation oder Pervaporation kleine Moleküle wie Wasserstoff (kinetischer Gasdurchmesser von 0,289 nm), Helium (kinetischer Gasdurchmesser von 0,255 nm) oder Wasser (kinetischer Gasdurchmesser von 0,290 nm) nach dem Prinzip der molekularen Siebens von größeren Gasmolekülen wie beispielsweise CO, CO₂, CH₄ und höheren aliphatischen oder aromatischen Kohlenwasserstoffen (kinetischer Gasdurchmesser von > 0,3 nm) aufgrund des Größenunterschieds abzutrennen. Besonders interessant sind in diesem Zusammenhang die Clathrasile vom Gerüsttyp SOD, AST und SGT, da diese die höchsten 6-Ringdichte und ein 3-dimensionales Porensystem aufweisen.

Im Stand der Technik findet sich allerdings kein Hinweis, wie eine Clathrasil-Membran herzustellen ist. Beispielsweise offenbart Münzer et al (Microporus and Mesoporous Materials 110 (2008) 3-10), dass es nicht gelungen ist, geeignete Seedkristalle von einem Reinsilica-SOD-Zeolithen mit Hilfe von verschiedenen organischen Verbindungen als strukturweisende Reagenzien (Template) für die secondary-growth Methode herzustellen. Es konnte lediglich eine geringe Menge an Nanokristallen hergestellt werden, die zusammen mit einer hohen Anzahl von großen Partikeln und unreagiertem amorphen Material anfiel. Ferner konnte eine Isolierung der Nanokristalle nur unter einem immensen Aufwand durchgeführt werden. Demnach scheiterte die Herstellung einer Clathrasil-Membran bislang an der Bereitstellung von Clathrasil-Seedkristallen.

Ebenso ist es van der Donk et al. (Microporus and Mesoporous Materials 115 (2008) 3-10) nicht gelungen selektiv trennende D1H Membranen herzustellen (D1H ist die Reinsilikavariante des 6-Ringstrukturtyps DOH). Es gelang zwar durch Mahlen größerer Kristalle und Erhitzen in Luft bei erhöhtem Druck und einer Temperatur von 900 °C praktisch templatfreie Kistalle, allerdings unter einem gewissen Verlust an Kristallinität, zu erzeugen. Die nach der secondary-growth Methode auf Aluminiumoxidsupport hergestellten Schichten zeigten jedoch nach einer 5-stündigen Detemplatisierung bei 700°C keine geschlossene Schicht, sondern interkristalline Löcher und partielle Abplatzungen und sind damit als Gastrennmembranen nicht geeignet. Ob die partiell intakten Bereiche der D1H Schicht templatfrei waren, wird nicht offenbart.

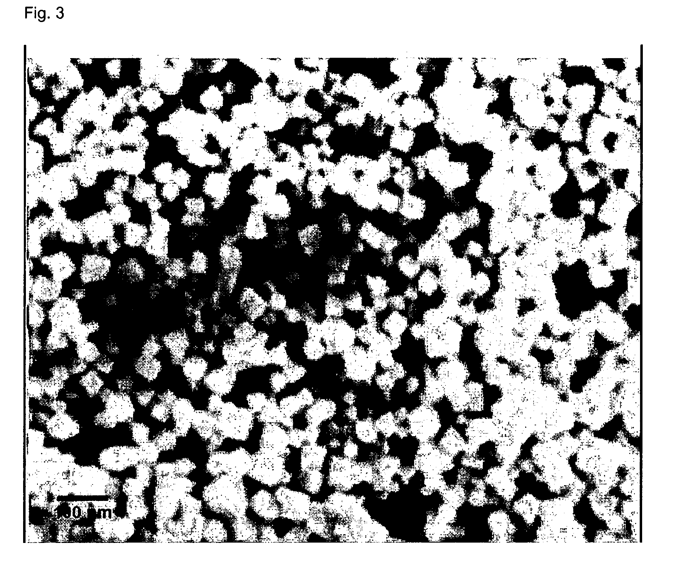

Die Kristallgeometrie des im Stand der Technik bekannten Clathrasils SOD ist kubisch; vorwiegend weisen die Kristalle daher eine Würfel-, Oktaeder- oder Rhombododecaeder-Morphologie auf. Münzer et al. offenbart beispielsweise den Tetramethylammonium-AlSi-SOD in Würfelform (Microporus and Mesoporous Materials 110 (2008) 3-10, Fig. 3). AST ist ebenfalls kubisch und zeigt als Kristallmorphologie den Oktaeder. Der Clathrasil SGT ist dagegen tetragonal und zeigt als Kristallmorphologie gekappte Bipyramiden.

Bereits die Herstellung von templatfreien Clathrasil ist sehr aufwendig, da die Detemplatisierung erst bei Temperaturen von 800 bis 1000 °C erfolgt und ferner für mehrere Stunden bis Wochen durchgeführt werden muss. Eine weitere Schwierigkeit besteht darin, die Zeolithstrukturen bei den hohen Temperaturen und der langen Reaktionsdauer intakt zu halten.

Oberhagemann et al. offenbaren in Angew. Chem. 1996, 108, Nr. 23/24, Seiten 3041 bis 3044, dass Schichtsilikatstrukturen als Zeolithvorläufer dienen können. Beispielsweise wurde durch einfaches Erhitzen aus PREFER FER und aus MCM-22 MWW gewonnen. Oberhagemann et al. vermuten, dass bei geeigneter Temperaturbehandlung der RUB-15 in den Zeolith Sodalith übergeht. Leider hat sich diese Vermutung, dass eine reine Temperaturbehandlung des RUB-15 zum Sodalithen führt, nicht bewahrheitet, wie das Beispiel 5 zeigt.

Ferner sind beispielsweise topotaktische Kondensationen für die Umwandlung von RUB-18 in RUB-24 (Marler et al.: The structure of the new pure silica zeolite RUB-24, obtained by topotactic condensation of the intercalated layer silicate RUB-18, Microporous and Mesoporous Materials 83 (2005) 201-211), oder von Octosilicat in RWR beschrieben (Oumi et al.: Convenient conversion of crystalline layered silicate octosilicate into RWR-type zeolite by acetic acid intercalation, New Journal of Chemistry 31(2007), S. 593-597). Die erhaltenen Zeolithe weisen aber Ringe mit mehr als 6 verknüpften SiO₄-Tetraeder auf und sind somit nicht für die Trennaufgabe geeignet.

Gegenüber dem Einsatz der Clathrasile in Pulverform als Absorbens bietet eine Clathrasil-Membran die Möglichkeit, Moleküle mittels eines kontinuierlichen Prozesses zu separieren, was sich als besonders interessant erweisen kann sowohl vom technologischen als auch vom wirtschaftlichen Blickpunkt aus.

Folglich bestand die Aufgabe der vorliegenden Erfindung darin, ein vereinfachtes Verfahren zur Herstellung von templatfreien Clathrasilen aufzuzeigen. Ferner bestand die Aufgabe darin, eine Clathrasil-Membran und ein Herstellverfahren für diese Membran aufzuzeigen.

Überraschenderweise wurde Clathrasil, dessen Gerüst im Wesentlichen SiO₂ enthält, gefunden, wobei die Kristalle des Clathrasils nicht der üblicherweise möglichen bekannten Morphologie entspricht, sondern die ausgeprägt plättchenförmige Morphologie des Schichtsilikates aufweist, aus dem der Clathrasil hervorgegangen ist. Diese Clathrasile lassen sich nach einem einfachen und kostengünstigen Verfahren, wie nachstehend beschrieben, herstellen.

Unter dem Begriff "Clathrasile" werden in der vorliegenden Erfindung Zeolithe verstanden, die Ringe mit ≤ 6 über Sauerstoff verknüpfte SiO₄ Tetraeder aufweisen. Die Clathrasile SOD und AST besitzen 6er- und 4er-Ringe, der Clathrasil SGT 6er-, 5er- und 4er-Ringe. Demnach werden unter dem Begriff "Clathrasile" in der vorliegenden Erfindung keine Zeolithe verstanden, die Ringe mit > 6 über Sauerstoff verknüpfte SiO₄ Tetraeder aufweisen, wie beispielsweise DDR (8er-Ringe) oder MFI (10er Ringe).

Im Folgenden sind die üblichen Kristallmorphologien, die bei der klassischen direkten Hydrothermalsynthese der folgenden Clathrasile auftreten, zusammengestellt: Zeolith-Gerüsttyp SOD (kubisch): Würfel, Oktaeder, Rhombododecaeder Zeolith-Gerüsttyp AST (kubisch): Oktaeder Zeolith-Gerüsttyp SGT (tetragonal): gekappte Bipyramide

Unter dem Begriff "im Wesentlichen SiO₂" wird in der vorliegenden Erfindung verstanden, dass das Gerüst des Clathrasils ausschließlich SiO₂ enthält und weniger als 0,1 Gewichts-% Verunreinigungen von weiteren Metallen wie beispielsweise Al, B, Si, Be, Ge und Ga. Insbesondere sind keine Verunreinigungen von anderen Metallen nachweisbar.

Bevorzugt weisen die aus einem Schichtsilikat erzeugten Clathrasile eine ausgeprägt plattige bzw. plättchenförmige Kristallmorphologie auf. Die Plättchen besitzen vorteilhaft eine Dicke von 5 bis 600 nm, insbesondere 5 bis 100 nm, einen Plattendurchmesser von vorteilhaft 50 bis 20000 nm, insbesondere 100 bis 2000 nm, aufweisen und ein Verhältnis Durchmesser zu Dicke im Bereich von vorteilhaft 15 bis 30.

Bevorzugte Clathrasile stellen die Zeolith-Gerüsttypen SOD, AST, SGT oder andere Clathrasile mit einem hohen 6-Ringanteil dar, insbesondere SOD und besonders bevorzugt der aus RUB-15 erhaltene SOD.

Ferner betrifft die vorliegende Erfindung ein Verfahren zur Herstellung von templatfreien Clathrasilen, deren Gerüst im Wesentlichen SiO₂ enthält, aus Schichtsilikaten umfassend folgende Stufen:
(i) Austausch der in den Zwischenschichten der Schichtsilikate eingelagerten Kationen und falls vorhanden mindestens teilweise des Kristallwassers gegen mindestens eine organische und polare, wasserlösliche Verbindung
(ii) Thermische topotaktische Kondensation der mit mindestens einer organischen Verbindung ausgetauschten Schichtsilikate in Clathrasile

Die Stufe (i) wird vorteilhaft bei einer Temperatur von 0 bis 100 °C, bevorzugt 20 bis 60 °C durchgeführt. Der Druck liegt vorteilhaft bei 1 bis 2 bar absolut.

Die Reaktionszeit des Schritts (i) beträgt typischerweise 1 Stunde bis 2 Tage.

Die organische Verbindung ist vorteilhaft eine polare, wasserlösliche Substanz aus der Gruppe der Amine, Ether, Ketone, Alkohole und Säureamide oder Mischungen hieraus. Beispielsweise können Ethylamin, mehrfunktionelle aliphatische Amine, Dioxan, Aceton, Ethanol, Ethylenglycol, Formamid sowie bevorzugt Säuren mit einer C₁ bis C₅-Kette, insbesondere Essigsäure, Verwendung finden.

Vorteilhaft wird die organische Verbindung in wässriger Mischung in einer Konzentration von 20 bis 90 mol%, bevorzugt 40 - 80 mol%, eingesetzt. Die Menge bezogen auf das eingesetzte Schichtsilikat sollte so bemessen sein, dass auf molarer Basis pro auszutauschendem Kation ein Überschuss an organischer Verbindung von mindestens 1 zu 100 eingesetzt wird. Die Konzentration der Essigsäure im Falle des Austausches des Tetramethylammoniumkations gegen Essigsäure beim RUB-15 liegt vorteilhaft bei 5 bis 15 mol/l, bevorzugt bei 8 bis 12 mol/l, insbesondere bei 10 mol/l.

Als Kationen werden bevorzugt Tetramethylammonium, Benzyltrimethylammonium und Alkalikationen wie beispielsweise Na⁺ ausgetauscht.

Besonders bevorzugt werden als Schichtsilikate RUB-15 und/oder RUB-51 als SOD-Vorstufe und HLS als AST-Vorstufe eingesetzt.

Der RUB-15 enthält ausschließlich Tetramethyammoniumkationen sowie Kristallwasser, der RUB-51 ausschließlich Benzyltrimethylammoniumkationen sowie kein Kristallwasser und der Helix Layered Silicate (HLS) Tetramethyammonium- und Natriumkationen sowie Kristallwasser in den Zwischenschichten. Für den Clathrasil SGT ist bisher keine Schichtsilikatvorstufe bekannt.

Besonders bevorzugt werden in der Stufe (i) im RUB-15 die Tetramethylammoniumkationen gegen Essigsäure ausgetauscht, wobei HOAc-RUB-15 entsteht. Besonders bevorzugt werden in der Stufe (i) im RUB-51 die Benzyltrimethylammonium- und Natriumkationen gegen Essigsäure ausgetauscht, wobei HOAc-RUB-51 entsteht.

Die Synthese von RUB-15, RUB-51 oder HLS ist dem Fachmann allgemein bekannt und wird beispielsweise von Oberhagemann et al. (Angew. Chem. 1996, 108, Nr. 23/24, 3041-3044) für den RUB-15, von Gies et al. (Chem. Mater. 2008, 20, 1896-1901) für RUB-51 und von Ikeda et al. (Chem. Mater. 2001, 13, 1286-1295) beschrieben.

Die Stufe (ii) wird vorteilhaft in Luft bei einer Temperatur von 400 bis 900 °C, bevorzugt 500 bis 600 °C durchgeführt. Der Druck liegt vorteilhaft bei 0 bis 1 bar absolut.

Die Reaktionszeit des Schritts (ii) beträgt typischerweise 1 bis 8 Stunden.

Bevorzugt werden die Schichtsilikate in SOD oder AST Zeolithe überführt, insbesondere wird RUB-15 und/oder RUB-51 in SOD oder HLS in AST Zeolithe überführt, ganz besonders bevorzugt wird RUB-15 in SOD (RUB-15-SOD) überführt.

Ferner betrifft die vorliegende Erfindung die Verwendung des erfindungsgemäßen templatfreien Clathrasils als Absorbens, als Seedkristall für die Zeolithmembransynthese oder als Membranschicht.

Beispielsweise werden die erfindungsgemäßen templatfreien Clathrasile als Adsorbens für Wasserstoff in der Druck-Wechsel-Adsorbtion direkt oder nach Kompoundierung/Granulierung mit anorganischen Hilfsstoffen zur Erzeugung größerer Partikel verwendet. Ferner können die erfindungsgemäßen templatfreien Clathrasile als Seedkristalle dienen, die, abgeschieden auf einem Träger, für die klassische secondary growth Methode zur Herstellung von Zeolith-Membranen benötigt werden. Weiterhin können die erfindungsgemäßen templatfreien Clathrasile als Membranschicht nach Abscheidung des Precursors auf einem Träger und topotaktischer Umwandlung zum Einsatz kommen. Membranschichten werden vorteilhaft bei der Gasseparation, Dampfpermeation oder Pervaporation eingesetzt. Im Fall der Pervaporation ist der Feed flüssig und das Permeat gasförmig.

Darüber hinaus betrifft die vorliegende Erfindung eine Clathrasil-Membran enthaltend einen porösen anorganischen Träger und eine Membran hergestellt unter Verwendung von Clathrasil, dessen Gerüst im Wesentlichen SiO₂ enthält, wobei die Kristalle des Clathrasils die plättchenförmige Morphologie eines Schichtsilikats aufweisen.

Vorteilhaft weisen die Träger einen Körper mit durchgängigen Poren mit einem Porendurchmesser zwischen 1 und 10000 nm auf, bevorzugt 1 bis 200 nm. Der Gesamtanteil des Porenvolumens ist vorteilhaft größer als 20 %, bevorzugt größer als 30 %.

Der Träger kann alle dem Fachmann bekannten Geometrien aufweisen, beispielsweise röhrenförmig, eben, in Form von einer Scheibe, eines Blattes oder auch von Fasern sein. Bevorzugt werden die Träger in Form von flachen Scheiben mit einem Durchmesser bis 0,5 m, Rohren mit einem Innen- bzw. Außendurchmesser von 2 - 20 mm, Kapillaren mit einem Innen- bzw. Außendurchmesser von 0,5 - 2 mm oder in Form sogenannter Multikanalelemente, die bei keramischen Membranen für die Mikro- oder Ultrafiltration Anwendung finden, eingesetzt.

Unabhängig von der geometrischen Form des Trägers ist ein asymmetrischer Aufbau des Trägers vorteilhaft, bei dem dieser ausgehend von einem Grundkörper aus mehreren aufeinanderfolgenden Schichten, vorteilhaft 1 bis 6 Schichten, mit abnehmendem Porendurchmesser besteht, wobei sich auf der mit der Trennschicht zu versehenden Seite des Trägers der kleinste Porendurchmesser befindet. Dieser kleinste Porendurchmesser beträgt vorteilhaft 0,5 bis 200 nm, bevorzugt 1 bis 100 nm. Die Dicke der aufeinanderfolgenden Schichten beträgt vorteilhaft 10 nm bis 50000 nm bevorzugt 100 bis 10000 nm.

Als Material für den Träger eignen sich eine Vielzahl von Materialien wie z. B. Stähle oder oxidkeramische Materialien wie z. B. die Oxide von Aluminiumoxid, Zirkonoxid, Titandioxid oder überwiegend aus Titandioxid bestehende Mischungen von Metalloxiden. Ferner eignen sich als Trägermaterialien Magnesiumoxid, Siliziumdioxid oder andere Metalloxide, sofern sie eine geringe Wasserlöslichkeit aufweisen. Weiterhin sind auch Carbide und Nitride wie z. B. Siliziumcarbid und Siliziumnitrid geeignet, sofern sie eine geringe Wasserlöslichkeit aufweisen.

Die erfindungsgemäße Clathrasil-Membran weist vorteilhaft eine Dicke von 200 nm bis 100000 nm, bevorzugt 500 bis 50000 nm, auf.

Bevorzugt werden als Clathrasile SOD und/oder AST Zeoltihe eingesetzt.

Die vorliegende Erfindung betrifft ferner ein Verfahren zur Herstellung von Clathrasil-Membranen ausgehend von Clathrasil-Seedkristallen, die aus einem Schichtsilikat hervorgegangen sind, umfassend folgende Stufen:
(i) Austausch der in den Zwischenschichten der Schichtsilikat-Kristalle eingelagerten Kationen und falls vorhanden mindestens teilweise des Kristallwassers gegen mindestens eine organische und polare, wasserlösliche Verbindung
(ii) Abscheiden der mit mindestens einer organischen Verbindung ausgetauschten Schichtsilikat-Kristalle auf einen anorganischen porösen Träger
(iii) Thermische topotaktische Kondensation der mit mindestens einer organischen Verbindung ausgetauschten Schichtsilikat-Kristalle in Clathrasil-Seedkristalle
(iv) Hydrothermale Synthese einer Clathrasil-Membran.

Die Stufe (i) im Verfahren zur Herstellung von Clathrasil-Membranen wird vorteilhaft analog der Stufe (i) zur Herstellung von templatfreien Clathrasilen, beschrieben auf der Seite 4, Zeile 40, bis Seite 5, Zeile 32, durchgeführt.

Ferner gelten die gleichen Bevorzugungen in Bezug auf die Schichtsilikate und die organische Verbindung wie auf der Seite 5 beschrieben.

Vorteilhaft weisen die Schichtsilikat-Kristalle, die in der Stufe (i) eingesetzt werden, eine Partikelgröße von kleiner 2 µm auf, bevorzugt von kleiner 1 µm. Insbesondere liegt die Partikelgröße zwischen 50 und 500 nm. Abweichend zu den in der Literatur beschriebenen Details zur Herstellung der Schichtsilikate, die in der Regel zu zu großen Kristallen führen, lassen sich durch dem Fachmann bekannte Einflussgrößen (z. B. Konzentration von Reaktanden und Hilfsstoffen, Eintrag von Rührenergie) die Kristallgröße optimieren.

Die Stufe (ii) kann vorteilhaft durch Auffiltration oder durch Anheften mit polymeren quarternären Ammoniumverbindungen erfolgen.

Die Bevorzugungen hinsichtlich des anorganischen porösen Träger sind auf der Seite 6, Zeile 35, bis Seite 7, Zeile 20, beschrieben.

Vorteilhaft wird eine die Schichtsilikat-Kristalle enthaltende, bevorzugt wässrige, Suspension mit der zu beschichtenden Seite des Trägers in Kontakt gebracht und vorteilhaft wird die Schichtsilikat-Kristalle enthaltende Suspension entweder in Folge eines anlegten Überdrucks auf der zu beschichtenden Seite gegenüber der nicht zu beschichtenden Seite, infolge eines angelegten Unterdruckes auf der nicht zu beschichtenden Seite oder infolge eines von den Poren ausgeübten Kapillarsogs, in die Poren des Trägers eingetragen. Hierbei akkumulieren die Kristalle auf der zu beschichtenden Seite des Trägers, sofern die Partikel größer sind als die Poren des Trägers.

Vorteilhaft können die Kristalle auch durch ein geeignetes Hilfsmittel an den Träger angeheftet werden. Als Hilfsmittel sind mono- oder polymere quarternäre Ammoniumsalze, wie beispielsweie Poly-DADMAC (Redifloc^{®}), bevorzugt.

Die Kristallabscheidung erfolgt vorteilhaft mit einer wässrigen 0,05 bis 1,0 Gew%igen Kristallsuspension bei Raumtemperatur und Umgebungsdruck gegebenenfalls unterstützt durch einen Differenzdruck über den Träger von bis zu 1 bar. Die Kontaktzeit mit der Suspension beträgt für die Auffiltration und das Anheften ca. 0,5 bis 5 min.

Nach Abschluss der Kristallabscheidung werden die flächen Träger vorteilhaft aus der verbleibenden Suspension herausgenommen. Falls Trägerrohre, die innen beschichtet werden sollen, Verwendung finden, wird die verbleibende Suspension vorteilhaft mit einer Geschwindigkeit von 0,1 bis 10 cm/s abgelassen.

Der Träger mit den abgeschiedenen Schichtsilikat-Kristallen wird dann vorteilhaft an der Luft bei Raumtemperatur getrocknet.

Die Stufe (iii) im Verfahren zur Herstellung von Clathrasil-Membranen wird analog der Stufe (ii) zur Herstellung von templatfreien Clathrasil, beschrieben auf der Seite 5, Zeile 39, bis Seite 6, Zeile 4, durchgeführt.

Die Stufe (iv), die hydrothermale Synthese, ist dem Fachmann allgemein bekannt und wird analog der secondary-growth-Methodes durchgeführt (siehe z. B. Caro et al.: zeolite membranes - recent developments and progress, Microporous and Mesoporous Materials 115 (2008) 215-233).

Bevorzugte Prozessbedingungen des Stufe (iv) sind Temperaturen zwischen 80 und 200 °C bei einem Druck zwischen 1 bis 15 bar. Die Synthesezeit kann zwischen 0,5 bis 20 Tagen liegen.

Die vorliegende Erfindung betrifft ferner ein alternatives Verfahren zur Herstellung von templatfreien Clathrasil-Membranen ausgehend von Schichtsilikat-Kristallen umfassend folgende Stufen:
(i) Austausch der in den Zwischenschichten der Schichtsilikat-Kristallen eingelagerten Kationen und falls vorhanden mindestens teilweise des Kristallwassers gegen mindestens eine organische und polare, wasserlösliche Verbindung
(ii) Abscheiden der mit mindestens einer organischen Verbindung ausgetauschten Schichtsilikat-Kristallen auf einen anorganischen porösen Träger bis eine den Träger bedeckende Schicht aus Schichtsilikat-Kristallen entstanden ist
(iii) Thermische topotaktische Kondensation der mit mindestens einer organischen Verbindung ausgetauschten Schichtsilikat-Kristalle in der abgeschiedenen Schicht in eine Clathrasil-Membran.

Die Stufe (i) im alternativen Verfahren zur Herstellung von Clathrasil-Membranen wird vorteilhaft analog der Stufe (i) zur Herstellung von templatfreien Clathrasilen, beschrieben auf der Seite 4, Zeile 40, bis Seite 5, Zeile 32, durchgeführt.

Vorteilhaft wird in Stufe (ii) eine Schicht aus Schichtsilikat-Kristallen auf dem Träger abgeschieden, die eine Dicke von 200 bis 100000 nm aufweist, bevorzugt 500 bis 50000 nm.

Die Stufe (iii) im alternativen Verfahren zur Herstellung von Clathrasil-Membranen wird vorteilhaft analog der Stufe (ii) zur Herstellung von templatfreien Clathrasilen, beschrieben auf der Seite 5, Zeile 39, bis Seite 6, Zeile 4, durchgeführt.

Ferner gelten die gleichen Bevorzugungen in Bezug auf die Schichtsilikate und die organische Verbindung wie auf der Seite 5 beschrieben.

Vorteilhaft werden die erfindungsgemäßen Clathrasile als Adsorbens oder in Form von Membranen zur Abtrennung von Wasserstoff, und/oder Ammoniak und/oder Wasser aus Kohlenwasserstoffgemischen enthaltend z. B. Ethan / Ethen, Propan / Propen, Butan / Buten oder Methan und/oder Benzol bzw. aus Kohlenmonoxid und/oder Kohlenstoffdioxid verwendet. Besonders vorteilhaft ist der Einsatz der Clathrasil-Membranen in Kombination mit chemischen Reaktionen, bei denen das Gleichgewicht durch Abtrennung von Gasen mit einem kinetischen Gasdurchmesser < 0,3 nm (H₂, NH₃, H₂O) zugunsten des gewünschten Produktes verschoben werden kann. Die Abtrennung kann dabei aus Kreisgasen, die in die Reaktion zurückgeführt werden, oder direkt in Membranreaktoren (katalytische Reaktion und Separation in einem Apparat) erfolgen. Vom Prinzip her können alle Gase mit einem kinetischen Gasdurchmesser < 0,3 nm (H₂, NH₃, H₂O, He, Ne) alleine oder in Mischung von Gasgemischen deren Komponenten kinetische Gasdurchmesser > 0,3 nm aufweisen abgetrennt werden. Vorteilhaft wird die Abtrennung von Wasserstoff und/oder Ammoniak und/oder Wasser bei Temperaturen von 50 bis 800 °C, bevorzugt 100 bis 700 °C, insbesondere 200 bis 600 °C, durchgeführt.

Ferner betrifft die vorliegende Erfindung ein Verfahren zum Extrahieren von Gasen mit einem kinetischen Gasdurchmesser < 0,3 nm aus gasförmigen und/oder flüssigen Stoffgemischen, dadurch gekennzeichnet, dass das Stoffgemisch mit einer Clathrasil-Membran in Kontakt gebracht wird.

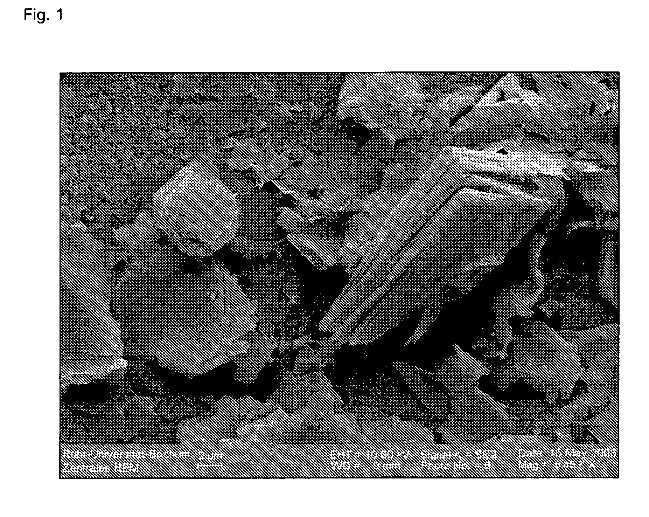

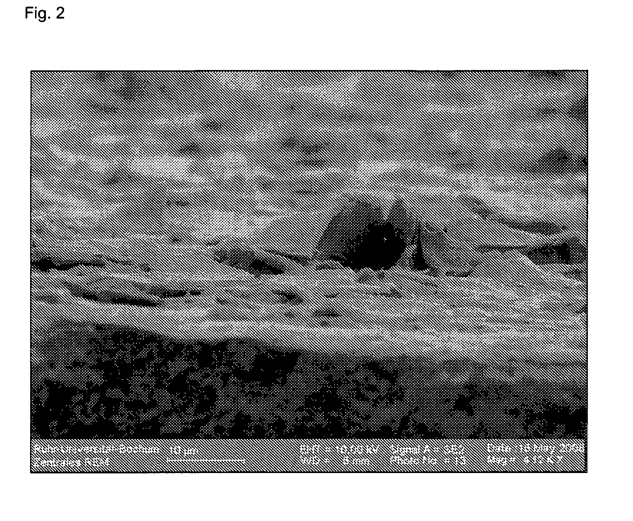

In der vorliegenden Erfindung ist es zum ersten Mal gelungen, Clathrasile mit einer Schichtsilikat-Kristallmorphologie herzustellen, die als Seedkristall in der Synthese von Clathrasil-Membranen eingesetzt werden können. Ein Vorteil dieser Kristallmorphologie sind im Falle der Druckwechseladsorption kurze Diffusionswege (Plättchen Morphologie). Bei der Herstellung von Membranen nach dem alternativen Verfahren entstehen direkt templatfreie Membranen bei moderaten Herstelltemperaturen, eine Detemplatisierung bei deutlich höheren Temperaturen kann entfallen. Die Kristallmorphologie der erfindungsgemäßen Clathrasile ist in den Figuren 1 und 2 dargestellt. Eine typische Kristallmorphologie von Clathrasil aus dem Stand der Technik ist in Fig. 3 dargestellt (Münzer et al, Microporus ans Mesoporous Materials 110 (2008) 3-10, Fig. 3).

### Beispiele

### 1. Herstellung von templatfreiem SOD durch (i) Austausch des TMA⁺ und des Kristallwassers gegen Essigsäuremoleküle und (ii) topotaktische Kondensation

### 1.1 Synthese des Schichtsilikats RUB-15:

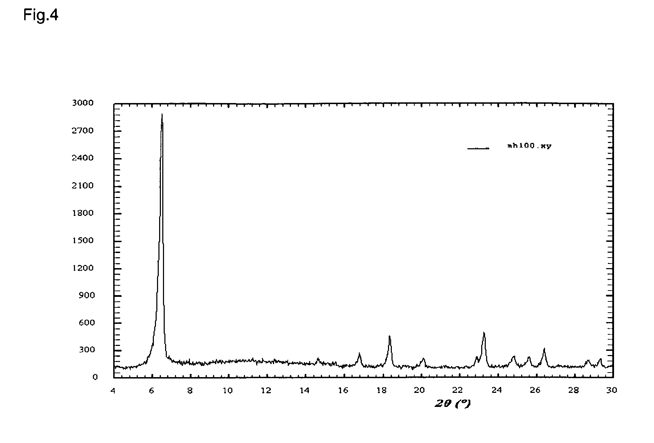

Die Synthese des Schichtsilikats RUB-15 erfolgte gemäß der Veröffentlichung von Oberhagemann et al. (Oberhagemann, Bayat, Marler, Gies, Rius: Ein neuer Schichtsilikattyp: Synthese und Struktur des Zeolith-Precursers RUB-15, Angew. Chemie, 108, Nr. 23/24, 3041-3044, (1996)). Als Synthesemischung wurde 16 ml TMAOH-Lsg. (25 Gew% in H₂O) und 9,05 ml Tetramethoxysilan eingesetzt. Als Reaktionsgefäß diente ein Teflon-ausgekleideter Stahlautoklav mit statischer Synthesebedingung. Die Synthesezeit betrug 21 Tage, die Synthesetemperatur lag bei 140 °C.
Das originale Röntgenpulverdiagramm des erhaltenen Materials ist in Fig. 4 abgebildet.

### 1.2 Austausch des TMA⁺ und des Kristallwassers gegen Essigsäuremoleküle:

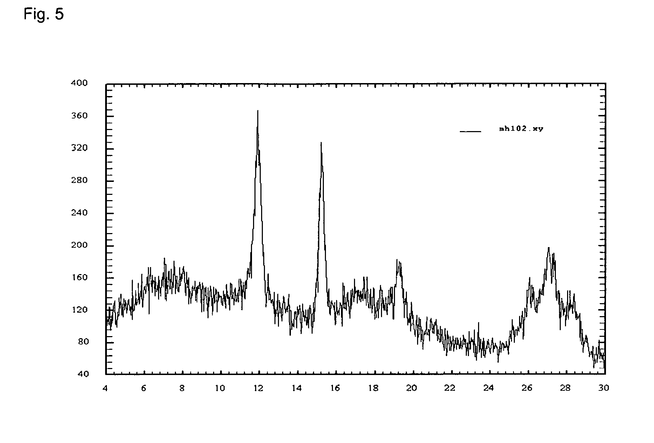

Eine Mischung aus 300 mg TMA-Rub-15 und 60ml 10 molarer Essigsäure wurden 21 Stunden bei Raumtemperatur gerührt, der Feststoff wurde anschließend abzentrifugiert und 3 mal mit destilliertem Wasser gewaschen, schließlich 5 Tage bei 60 °C getrocknet.
Das originale Röntgenpulverdiagramm des erhaltenen Materials ist in Fig. 5 abgebildet.

### 1.3 Kondensation der Silikatschichten im Essigsäurebeladenen RUB-15 zu Silica-Sodalith:

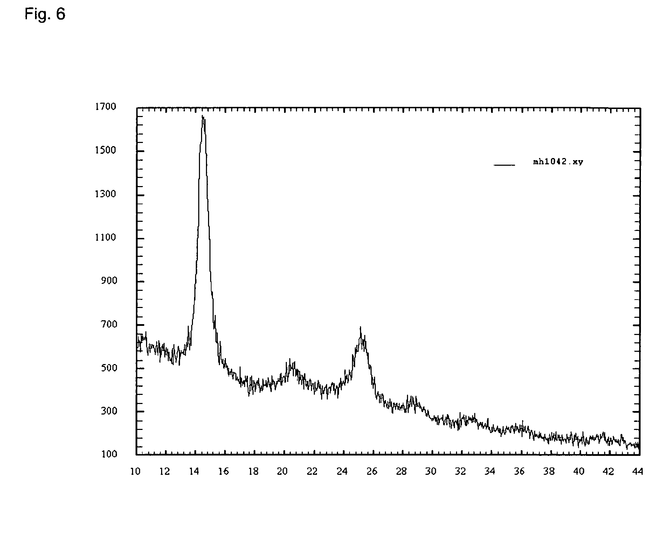

Der getrocknete Feststoff wurde mit 10 K/min auf 560°C erhitzt und für 5 Stunden bei 560°C gehalten. Dabei wurde die Essigsäure aus dem Material ausgetrieben während die terminalen Silanolgruppen benachbarter Silikatschichten zu Si-O-Si-Bindungen kondensierten. Es entstand das poröse Gerüstsilikat Silica-Sodalith in gastmolekülfreier Form.
Das originale Röntgenpulverdiagramm des erhaltenen Materials ist in Fig. 6 abgebildet.

### 2. Vergleichsdiagramm des erfindungsgemäßen SOD mit dem Stand der Technik:

In der nachfolgenden Tabelle 1 wird der gemäß Beispiel 1 hergestellte Silica-Sodalith mit einem Silica-Sodalithen aus dem Stand der Technik verglichen. Die Übereinstimmung der Röntgenpulverdiagramme ist eindeutig.

**Tabelle 1:**

| Durch topotaktische Kondensation aus Essigsäureausgetauschtem RUB-15 erhaltener Silica-Sodalith | | | As-made Silica-sodalith (Gastmolekül: Ethylendiamin): Braunbart et al. 1996. | | | Simuliertes Diagramm eines kubischen, gastmolekülfreien SilicaSodaliths | |
|---|---|---|---|---|---|---|---|
| d | l/l₀ | | d | l/l₀ | | d | l/l₀ |
| 6,17 | 100 | | 6,26 | 71 | | 6,231 | 100 |
| 4,34 | 15 | | 4,426 | 41 | | 4,406 | 12 |
| 3,53 | 30 | | 3,614 | 100 | | 3,598 | 39 |
| 3,10 | 10 | | 3,130 | 16 | | 3,116 | 10 |
| 2,71 | 5 | | 2,800 | 15 | | 2,787 | 9 |
| 2,51 | 5 | | 2,577 | 18 | | 2,544 | 11 |
| 2,19 | 5 | | 2,215 | 5 | | 2,203 | 4 |

| | | | | | | | |
|---|---|---|---|---|---|---|---|
| d = Netzebenenabstand [Å] l/l₀ = relative Intensität | | | | | | | |

Lit.: C.M. Braunbarth, P. Behrens, J. Felsche, G. V.d.Goor, G. Wildermuth, G. Engelhardt, Zeolites 16 (1996) 207-217

### 3. Charakterisierung des aus der RUB-15-Vorstufe erhaltenen Sodaliths:

0,3 bis 0,4 g des erhaltenen Materials wurden in einer Sorptionswage 4 Stunden bei 250 °C im Vakuum aktiviert und danach die Gewichtszunahme bei 25 °C mit zunehmendem Gasdruck für Stickstoff und Wasserstoff bestimmt.

**Tabelle 2:**

| Gasdruck (bar) | N₂-Absorption (mmol N₂/g SOD) | H₂-Absorption (mmol H₂/g SOD) |
|---|---|---|
| 10 | 0,007 | 0,085 |
| 20 | < 0,001 | 0,17 |
| 30 | 0,005 | 0,325 |
| 40 | -0,001 | 0,37 |
| 50 | -0,010 | 0,46 |
| 60 | -0,011 | 0,575 |

Die Daten zeigen eindeutig, dass der aus RUB-15 hergestellt Sodalith Wasserstoff (kinetischer Gasdurchmesser = 0,289 nm) im Zeolithen absorbiert und Stickstoff (kinetischer Gasdurchmesser = 0,372 nm) nicht.

### 4. Herstellung von gastmolekülfreiem Silica-Sodalith durch Kondensation von essig säurehaltigem RUB-15:

Austausch der im TMA-RUB-15 vorhandenen Komponenten Tetrametylammonium und Wasser gegen Essigsäuremoleküle durch Rühren von festem TMA-RUB-15 in Essigsäure analog Beispiel 1.2 bei verschiedenen Konzentrationen (und anschließendem Erhitzen bei 560 °C):

**Tabelle 3:**

| Konzentration der verwendeten Essigsäure | Geschätzter Anteil von Silica Sodalith im erhaltenen Produkt |
|---|---|
| | |
| 5 molar | ca. 10 % Silica Sodalith |
| 8 molar | ca. 50 % Silica Sodalith |
| 10 molar | ca. 100 % Silica Sodalith |
| 13 molar | ca. 60 % Silica Sodalith |
| 17 molar | ca. 5 % Silica Sodalith |

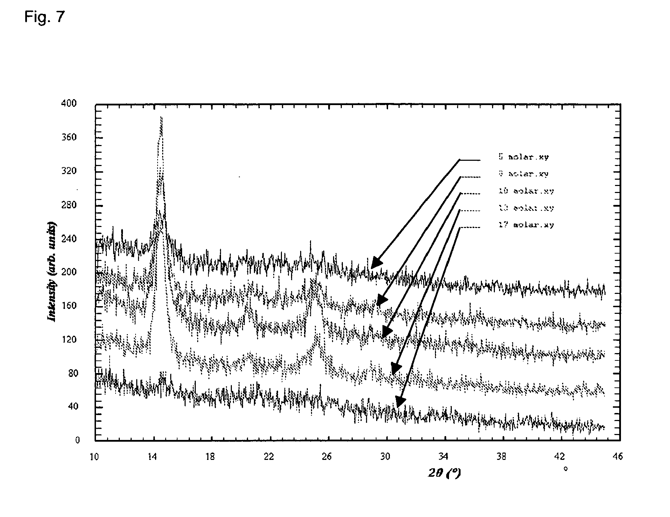

Die originalen Röntgenpulverdiagramm der erhaltenen Materialien sind in Fig. 7 abgebildet, wobei die Graphen mit zunehmender Essigsäurekonzentration von oben nach unten abgebildet sind.

### 5. Reine topotaktische Kondensation des Schichtsilikats RUB-15

Gemäß der Veröffentlichung von Oberhagemann et al. (siehe Beispiel 1.1) wurde Schichtsilikat RUB-15 hergestellt und ein Teil des Materials für 5 h bei 560 °C calziniert.

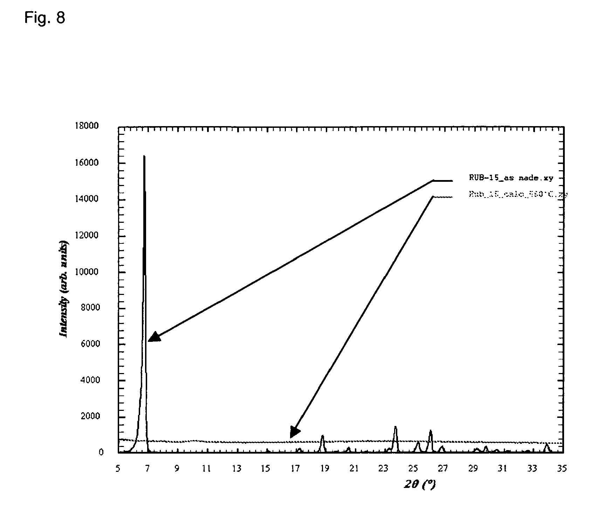

Von beiden Materialien, (i) RUB-15 ("as made") und (ii) kalzinierter RUB-15 (calc. 560°C) wurden Röntgendiagramme angefertigt, diese sind in der Fig. 8 abgebildet. Das Diagramm von RUB-15 ("as made") zeigt die typischen Peaks des kristallinen Schichtsilikates, das Diagramm des aus RUB-15 ("as made") durch Calcinierung hergestellten Materials RUB-15 (calc. 560°C) hingegen zeigt das typische Bild einer amorphen Substanz.

Folglich entsteht nicht - wie von Oberhagemann et al. in in Angew. Chem. 1996, 108, Nr. 23/24, Seiten 3041 bis 3044 angenommen - Sodalith durch einfaches Erhitzen von RUB-15 ("as made"). Der vorherige Austausch des Tetramethylammoniumkations (TMA⁺) und des Kristallwassers ist somit essentiell, um durch topotaktische Kondensation zum Sodalith zu gelangen.

## Patentansprüche

1. Templatfreier Clathrasil, dessen Gerüst im Wesentlichen SiO₂ enthält, wobei die Kristalle des Clathrasils die plättchenförmige Morphologie eines Schichtsilikats aufweisen.

2. Templatfreier Clathrasil nach Anspruch 1, wobei der Clathrasil die Morphologie des Schichtsilikats aufweist, aus dem der Clathrasil hervorgegangen ist.

3. Templatfreier Clathrasil nach Anspruch 1 oder 2, wobei die Plättchen eine Dicke von 5 bis 100 nm aufweisen.

4. Templatfreier Clathrasil nach den Ansprüchen 1 bis 3, wobei die Plättchen einen Plattendurchmesser von 80 bis 2000 nm aufweisen.

5. Templatfreier Clathrasil nach den Ansprüchen 1 bis 4, wobei das Verhältnis Durchmesser zu Dicke der Plättchen zwischen 15 und 30 liegt.

6. Templatfreier Clathrasil nach den Ansprüche 1 bis 5, wobei Clathrasil für SOD, AST oder SGT steht.

7. Templatfreier Clathrasil nach Anspruch 6, wobei Clathrasil für aus RUB-15 erhaltendes SOD steht.

8. Verwendung des templatfreien Clathrasils nach den Ansprüchen 1 bis 7 als Absorbens, als Seedkristall für die Zeolithmembransynthese oder als Membranschicht.

9. Clathrasil-Membran enthaltend mindestens einen porösen anorganischen Träger und mindestens eine Membran hergestellt unter Verwendung von Clathrasil nach den Ansprüche 1 bis 7.

10. Verwendung der Clathrasil-Membran nach Anspruch 9 zur Abtrennung von Gasen mit einem kinetischen Gasdurchmesser < 0,3 nm aus Gasgemischen.

11. Verfahren zum Extrahieren von Gasen mit einem kinetischen Gasdurchmesser <0,3 nm aus gasförmigen und/oder flüssigen Stoffgemischen, **dadurch gekennzeichnet, dass** das Stoffgemisch mit einer Clathrasil-Membran nach Anspruch 9 in Kontakt gebracht wird.
